# EUROPEAN PATENT APPLICATION

(11) **EP 4 415 420 A1**
(43) Date of publication of application: **14.08.2024**
(21) Application number: 22878137.3
(22) Date of filing: 10.05.2022
(51) Int. Cl.: H04W 28/04, H04L 1/16, H04W 72/12

(54) **COMMUNICATION DEVICE AND COMMUNICATION METHOD**

(30) Priority: 08.10.2021 JP 2021166187
(71) Applicant: Panasonic Intellectual Property Corporation of America, Torrance, CA 90504 (US)
(72) Inventor: NISHIO, Akihiko, Kadoma-shi Osaka 571-0057 (JP); SUZUKI, Hidetoshi, Kadoma-shi Osaka 571-0057 (JP)
(74) Representative: Grünecker Patent- und Rechtsanwälte PartG mbB
(86) International application number: PCT/JP2022/019831
(87) International publication number: WO 2023/058264

(57) **Abstract**

This communication device comprises: a control circuit that determines a setting relating to enabling and disabling of feedback during re-transmission control of dynamic scheduling on the basis of the type of identifier used for a control signal that performs the dynamic scheduling; and a transmission circuit that performs transmission processing of a signal for feedback on the basis of the setting for the enabling and disabling of the feedback.

## Description

### Technical Field

The present disclosure relates to a communication apparatus and a communication method.

### Background Art

In the standardization of 5G, a New Radio Access Technology (NR) is discussed in 3 GPP.

### Citation List

### Non Patent Literature

NPL 1
   3GPP, TR 38.821, V16.1.0 "Solutions for NR to support non-terrestrial networks (NTN) (Release 16)", 2021-05
NPL 2
   3GPP, TS 38.321, V16.6.0 "NR; Medium Access Control (MAC) protocol specification (Release 16)", 2021-09

### Summary of Invention

There is scope for further study, however, on a method for improving retransmission control efficiency.

A non-limiting embodiment of the present disclosure facilitates providing a communication apparatus and a communication method each capable of improving efficiency of retransmission control.

A communication apparatus according to an embodiment of the present disclosure includes: control circuitry, which, in operation, determines, based on a type of an identifier used for a control signal performing dynamic scheduling, a configuration of enabling and disabling of feedback in retransmission control of the dynamic scheduling; and transmission circuitry, which, in operation, performs transmission processing on a signal of the feedback based on the configuration of enabling and disabling of feedback.

Note that these generic or specific aspects may be achieved by a system, an apparatus, a method, an integrated circuit, a computer program, or a recoding medium, and also by any combination of the system, the apparatus, the method, the integrated circuit, the computer program, and the recoding medium.

According to an embodiment of the present disclosure, it is possible to improve retransmission control efficiency.

Additional benefits and advantages of one embodiment of the present disclosure will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary operations of Dynamic scheduling and Semi-persistent scheduling (SPS);
FIG. 2 is a block diagram illustrating an exemplary configuration of a part of a base station;
FIG. 3 is a block diagram illustrating an exemplary configuration of a part of a terminal;
FIG. 4 is a block diagram illustrating an exemplary configuration of the base station;
FIG. 5 is a block diagram illustrating an exemplary configuration of the terminal;
FIG. 6 is a sequence diagram illustrating exemplary operations of the base station and the terminal;
FIG. 7 illustrates an exemplary feedback configuration;
FIG. 8 illustrates another exemplary feedback configuration;
FIG. 9 illustrates still another exemplary feedback configuration;
FIG. 10 illustrates still another exemplary feedback configuration;
FIG. 11 illustrates an exemplary architecture of a 3GPP NR system;
FIG. 12 is a schematic diagram illustrating a functional split between Next Generation-Radio Access Network (NG-RAN) and 5th Generation Core (5GC);
FIG. 13 is a sequence diagram of a Radio Resource Control (RRC) connection setup/reconfiguration procedure;
FIG. 14 schematically illustrates usage scenarios of enhanced Mobile BroadBand (eMBB), massive Machine Type Communications (mMTC), and Ultra Reliable and Low Latency Communications (URLLC); and
FIG. 15 is a block diagram illustrating an exemplary 5G system architecture for a non-roaming scenario.

### Description of Embodiments

Hereinafter, embodiments of the present disclosure will be described in detail with reference to the drawings.

### [Regarding Retransmission Control]

In Long Term Evolution (LTE) or 5G NR, Hybrid automatic repeat request (HARQ) is applied to retransmission control during data transmission, for example.

In HARQ, a transmission side performs, for example, channel coding (Forward Error Correction (FEC)), such as turbo-coding or low density parity check (LDPC) coding, on data, and then transmits the coded data. During data decoding, a reception side, for example, saves (i.e., also referred to as buffers, stores, or holds) received data (e.g., soft determination value) in a buffer when the received data includes an error. Note that a buffer is also referred to as, for example, a HARQ soft buffer or simply a soft buffer. When receiving retransmitted data, the reception side combines (soft combines) the received data (e.g., retransmission data or data relating to retransmission request) and the previously received data (i.e., saved data), and decodes the combined data, for example. This allows the reception side to decode data using data with improved reception quality (e.g., signal to noise ratio (SNR)) in HARQ.

Meanwhile, in HARQ, the transmission side can improve coding gain by transmitting a parity bit different from that in the previous transmission (e.g., different redundancy version (RV)). Further, in HARQ, continuous data transmission is possible by using a plurality of processes (e.g., also called as "HARQ processes" or "retransmission processes") in consideration of a propagation path delay and/or processing delays on the transmission side and the reception side. In this case, the reception side separates received data per process ID (sometimes expressed as "PID" or "HARQ process ID"), which is identification information for identifying the process (or data), and saves the data in the buffer.

Further, in LTE or NR, for example, a base station (e.g., also referred to as eNB or gNB) indicates information on HARQ, such as a process ID, a new data indicator (NDI), and an RV, to a terminal (e.g., also referred to as user equipment (UE)) when assigning data. The terminal performs reception processing (e.g., software combining processing) on data (e.g., physical downlink shared channel (PDSCH)) based on the information on HARQ indicated from the base station.

Further, scheduling for data transmission includes, for example, "dynamic scheduling" and "semi-persistent scheduling (SPS)." For example, the dynamic scheduling may be scheduling in which a transmission parameter such as a time and frequency resource, a Modulation and Coding Scheme (MCS), an RV, or an NDI is indicated to terminal 200 by a downlink control channel (e.g., Physical Downlink Control Channel (PDCCH)) or downlink control information (e.g., Downlink Control Information (DCI)) for each PDSCH transmission. Further, the SPS (e.g., semi-static scheduling) may be scheduling in which a PDSCH is transmitted using a pre-configured transmission parameter such as a time and frequency resource or an MCS.

In Dynamic scheduling, for example, a base station indicates, to a terminal, a transmission parameter such as a time and frequency resource used for data transmission per data transmission unit (e.g., slot) or a Modulation and Coding Scheme (MCS) by a PDCCH (or DCI). After transmitting the transmission parameter, the base station transmits data (e.g., PDSCH). The PDCCH may be transmitted on a time and frequency resource called a Control Resource Set (CORESET), which is pre-configured.

In SPS, for example, a base station indicates a parameter such as a transmission period to a terminal by higher layer signaling (e.g., RRC signaling) in advance, and transmits data (e.g., PDSCH) in the indicated transmission period. In SPS, the base station may, for example, enable (activate) SPS transmission by transmitting a particular PDCCH (e.g., also referred to as activation DCI). Further, for example, when periodic transmission such as SPS is not required, the base station may disable (de-activate) SPS transmission by transmitting a particular PDCCH (e.g., also referred to as deactivation DCI).

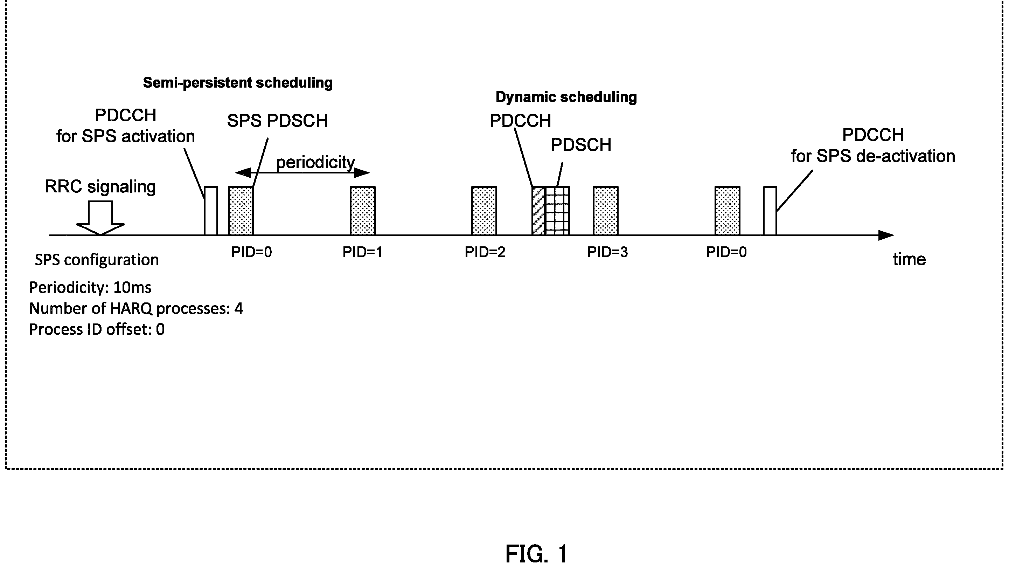

FIG. 1 illustrates exemplary scheduling of Dynamic scheduling and SPS.

In SPS, for example, parameters related to SPS configuration including a transmission period (periodicity), the number of HARQ processes (nrofHARQ-Processes), and an offset for a process number (harq-ProcID-Offset) may be indicated (or configured) to a terminal by RRC signaling (e.g., SPS-Config).

As illustrated in FIG. 1, SPS transmission may be activated, for example, by transmission of a PDCCH that indicates SPS activation. In SPS transmission, the base station may transmit data (e.g., PDSCH) using the specified frequency resource or MCS in the configured transmission period, for example. Further, as illustrated in FIG. 1, SPS transmission may be de-activated, for example, by transmission of a PDCCH that indicates SPS de-activation, and the periodic transmission may be stopped.

Note that SPS activation or SPS de-activation may be indicated to a terminal by a PDCCH that is scrambled by a Configured Scheduling - Radio Network Temporary Identifier (CS-RNTI) and to which NDI=0 is configured.

For example, the HARQ process ID (PID) of PDSCH transmitted in SPS (hereinafter, referred to as "SPS PDSCH") may be determined based on the transmission slot of the SPS PDSCH. For example, the HARQ process ID of SPS PDSCH may be determined by the following equation (e.g., see NPL 2).HARQ Process ID = [floor (CURRENT_slot × 10 / (numberOfSlotsPerFrame × periodicity))]modulo nrofHARQ-Process + harq-ProcID-Offset

CURRENT_slot herein indicates a slot number in which the SPS PDSCH is transmitted, numberOfSlotsPerFrame indicates the number of slots per frame, periodicity indicates a transmission period, nrofHARQ-Processes indicates the number of HARQ processes for SPS, and harq-ProcID-Offset indicates a process number offset.

Further, a plurality of SPS configurations (e.g., SPS-Config) may be configured for a terminal.

Furthermore, as illustrated in FIG. 1, dynamic scheduling may be performed even during a period in which SPS is activated. For example, retransmission of SPS PDSCH may be performed by dynamic scheduling. Here, for example, for scheduling of SPS PDSCH retransmission, a PDCCH in which Cyclic Redundancy Check (CRC) part (or CRC bit) is scrambled by CS-RNTI and to which NDI=1 is configured may be used. Further, for scheduling of new data different from the data transmitted by SPS or for scheduling of retransmission of the data, a PDCCH in which CRC part is scrambled by Cell-RNTI (C-RNTI) may be used.

Note that a PDSCH transmitted by dynamic scheduling is sometimes referred to as "Dynamic Grant PDSCH (DG PDSCH)," for example.

### [Extension to Non-Terrestrial Network (NTN)]

LTE and NR Rel. 15/16 have been specified as radio access technologies for terrestrial networks. Meanwhile, extension of NR to non-terrestrial networks (NTN) such as communication using a satellite and/or a high-altitude platform station (HAPS) has been studied (e.g., see NPL 1).

In the NTN environment, a coverage area (e.g., one or more cells) of a satellite for a terminal on the ground or a terminal located in airspace, such as an aircraft or drone, is formed by a beam from the satellite. In addition, a round trip time (RTT) of radio wave propagation between the terminal and the satellite is determined depending on the altitude of the satellite (e.g., approximately up to 36000 km) and the angle viewed from the terminal, that is, the positional relation between the satellite and the terminal.

For example, NPL 1 describes that the round trip time (RTT) of radio wave propagation between the base station and the terminal takes up to approximately 540 ms in the NTN.

Retransmission control is performed based on HARQ-ACK feedback (e.g., also referred to as HARQ feedback or UL HARQ feedback) configured for each HARQ process, for example. Thus, in the NTN where the RTT is longer than that of a terrestrial network, a large number of HARQ processes is possibly used for continuous data transmission. For example, for the NTN, disabling of HARQ-ACK feedback per HARQ process has been studied (e.g., see NPL 1).

For example, in a HARQ process in which feedback is enabled (e.g., feedback-enabled HARQ process), a terminal may transmit a response signal (e.g., referred to as "HARQ-ACK" or "ACK/NACK") and the base station may perform scheduling based on the HARQ-ACK. For example, in a HARQ process in which feedback is disabled (e.g., feedback-disabled HARQ process), on the other hand, a terminal transmits no HARQ-ACK and the base station may schedule next data without waiting for reception of HARQ-ACK.

It has also been discussed that configuration related to enabling and disabling of feedback (hereinafter, also referred to as "feedback enabling/disabling configuration") may be performed for each HARQ process (e.g., per HARQ process).

Note that, for a HARQ process in which feedback is disabled, the base station may transmit retransmission data without receiving a HARQ-ACK. The terminal may hold reception data in a buffer and may perform HARQ combining even for a HARQ process in which feedback is disabled. Note that the retransmission without receiving a HARQ-ACK is sometimes referred to as "Blind retransmission" or "Open loop HARQ."

The extension to NTN has been described thus far.

As described above, while feedback enabling/disabling configuration is performed per HARQ process, a HARQ process ID is determined based on a transmission slot in SPS. Thus, when a plurality of HARQ process IDs is configured in SPS, feedback enabling/disabling configurations for transmission slots of SPS are possibly different from one another depending on the feedback enabling/disabling configuration per HARQ process.

For example, data of the same data traffic type may be transmitted in the same SPS configuration (SPS-Config). Thus, when the feedback enabling/disabling configuration differs between transmission slots, Quality of Service (QoS) such as a data error rate or a delay request of the data traffic in the same SPS configuration is possibly not satisfied.

For example, in addition to the feedback enabling/disabling configuration per HARQ process, feedback enabling/disabling configuration for each SPS configuration (SPS-Config) (per SPS configuration) may be performed. Feedback enabling/disabling configurations for slots of SPS are made common by the feedback enabling /disabling configuration per SPS configuration, and thus the QoS of the data traffic is easily satisfied.

In this case, for example, a feedback enabling/disabling configuration per HARQ process and a feedback enabling/disabling configuration per SPS configuration are possibly different from each other for a certain HARQ process ID. There is room for further study on the operation in this case.

In a non-limiting embodiment of the present disclosure, a method for configuring enabling/disabling of feedback when a feedback enabling/disabling configuration per HARQ process and a feedback enabling/disabling configuration per SPS configuration are different from each other for a certain HARQ process ID.

For example, in a non-limiting embodiment of the present disclosure, in addition to feedback enabling/disabling configuration per HARQ process, feedback enabling/disabling configuration per SPS configuration (e.g., SPS-Config) is performed. Further, in a non-limiting embodiment of the present disclosure, for example, whether to follow a feedback enabling/disabling configuration per HARQ process or a feedback enabling/disabling configuration per SPS configuration may be determined, for a PDSCH (e.g., DG PDSCH) with the same process ID as HARQ process ID configured for SPS, based on at least one of a type of RNTI by which CRC part of a PDCCH used for scheduling a PDSCH is scrambled and/or a HARQ process ID.

### (Embodiment 1)

### [Overview of Communication System]

A communication system according to an embodiment of the present disclosure includes base station 100 and terminal 200.

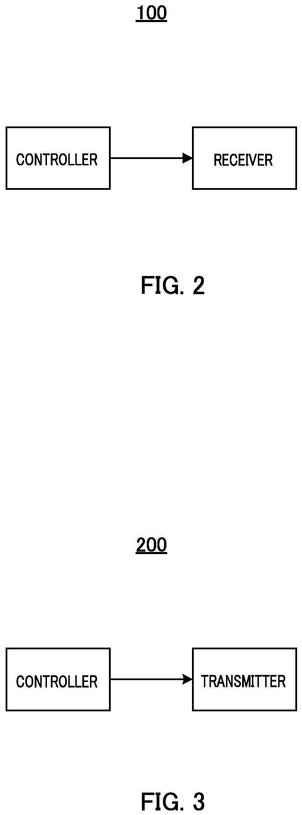

FIG. 2 is a block diagram illustrating an exemplary configuration of a part of base station 100 (e.g., corresponding to a communication apparatus). In base station 100 illustrated in FIG. 2, a controller (e.g., corresponding to control circuitry) determines a configuration related to enabling and disabling of feedback (e.g., HARQ feedback) in retransmission control of dynamic scheduling based on a type of an identifier (e.g., RNTI) used for a control signal (e.g., PDCCH) performing dynamic scheduling. A receiver (e.g., corresponding to reception circuitry) performs reception processing on a feedback signal (e.g., HARQ-ACK) based on the feedback enabling/disabling configuration.

FIG. 3 is a block diagram illustrating an exemplary configuration of a part of terminal 200 (e.g., corresponding to a communication apparatus). In terminal 200 illustrated in FIG. 3, a controller (e.g., corresponding to control circuitry) determines a configuration related to enabling and disabling of feedback (e.g., HARQ feedback) in retransmission control of dynamic scheduling based on a type of an identifier (e.g., RNTI) used for a control signal (e.g., PDCCH) performing dynamic scheduling. A transmitter (e.g., corresponding to transmission circuitry) performs transmission processing on a feedback signal (e.g., HARQ-ACK) based on the feedback enabling/disabling configuration.

### [Configuration of Base Station]

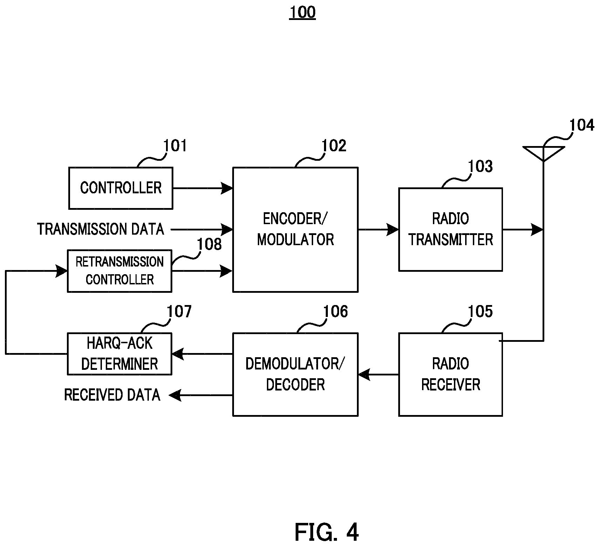

FIG. 4 is a block diagram illustrating an exemplary configuration of base station 100 according to the present embodiment. Base station 100 includes, for example, controller 101, encoder/modulator 102, radio transmitter 103, antenna 104, radio receiver 105, demodulator/decoder 106, HARQ-ACK determiner 107, and retransmission controller 108.

At least one of controller 101, encoder/modulator 102, demodulator/decoder 106, HARQ-ACK determiner 107, and retransmission controller 108 illustrated in FIG. 4 may be included in the controller illustrated in FIG. 2. At least one of antenna 104 and radio receiver 105 illustrated in FIG. 4 may be included in the transmitter illustrated in FIG. 2, for example.

Controller 101 may generate, for example, information on a feedback enabling/disabling configuration per HARQ process (e.g., HARQprocess-disableULfeedback). For example, controller 101 may generate information on a feedback-enabled HARQ process ID and a feedback-disabled HARQ process ID. For example, the information on a feedback enabling/disabling configuration per HARQ process may be included in a PDSCH-Config Information Element (IE).

Further, controller 101 may generate, for example, information on SPS configuration. The information on SPS configuration may include, for example, at least one of an SPS transmission period (periodicity), the number of HARQ processes (nrofHARQ-Processes), a process number offset (harq-ProcID-Offset), and a feedback enabling/disabling configuration (e.g., HARQfeedback). Further, the information on SPS configuration may be included in SPS-Config IE, for example.

Note that at least one of the information on the feedback enabling/disabling configuration per HARQ process and the information on SPS configuration may be included in higher layer signaling (e.g., RRC reconfiguration message), or may be included in a control signal different from higher layer signaling (e.g., DCI).

Further, for example, controller 101 may generate a plurality of pieces of information on SPS configuration for terminal 200. Furthermore, controller 101 may generate a plurality of pieces of information on feedback enabling/disabling configurations.

Controller 101 outputs the generated control information to encoder/modulator 102.

For example, encoder/modulator 102 performs, on inputted transmission data (e.g., transport block) and the control information inputted from controller 101, error correction coding such as turbo coding, LDPC coding, or polar coding and modulation such as Quarter Phase Shift Keying (QPSK) or Quadrature Amplitude Modulation (QAM), and outputs the modulated signal to radio transmitter 103.

Encoder/modulator 102 may, for example, store transmission data in a buffer. When retransmission controller 108 indicates retransmission, for example, encoder/modulator 102 may perform the same processing as described above on the transmission data (e.g., retransmission data) stored in the buffer. When retransmission controller 108 indicates no retransmission (or transmission of new data), for example, encoder/modulator 102 may delete the corresponding transmission data stored in the buffer.

Further, encoder/modulator 102, for example, encodes and modulates downlink control information (e.g., DCI) and outputs the modulated signal to radio transmitter 103. DCI may include, for example, data assignment information such as time and frequency resource allocation information and information on a coding and modulation scheme (e.g., MCS information). DCI may also include, for example, information indicating a HARQ process ID, an NDI, an RV, a HARQ-ACK transmission timing (e.g., PDSCH-to-HARQ_feedback timing indicator) or information on retransmission control inputted from retransmission controller 108, such as Downlink Assignment Index (DAI) (e.g., Counter-DAI(C-DAI), Total-DAI(T-DAI)).

For example, radio transmitter 103 performs transmission processing such as D/A conversion, up-conversion, and amplification on the signal inputted from encoder/modulator 102, and transmits the radio signal after the transmission processing from antenna 104.

In LTE and 5G NR, for example, the transmission data may herein correspond to a PDSCH, and the data assignment information may correspond to DCI or a PDCCH

For example, since a PDCCH is indicated for each terminal 200, CRC part of PDCCH may be scrambled by an identifier (e.g., C-RNTI) individually assigned to terminal 200 in order for terminal 200 to identify the PDCCH addressed to terminal 200.

Further, base station 100 may generate DCI or a PDCCH that includes control information for activating or deactivating (or releasing) SPS transmission, for example. After activating SPS transmission, base station 100 may periodically perform data transmission processing in accordance with the SPS transmission period (periodicity). For example, control information (e.g., DCI) such as data assignment information need not be generated and transmitted for the SPS periodic transmission. Meanwhile, for retransmission data for data (PDSCH) transmitted by SPS, base station 100 may indicate the above-described assignment information to terminal 200 using a PDCCH in which CRC part is scrambled by an identifier (e.g., CS-RNTI) assigned to each terminal 200.

Radio receiver 105 performs, for example, reception processing such as downconversion and A/D conversion on a data signal (e.g., Physical Uplink Shared Channel (PUSCH)) and a control signal (e.g., HARQ-ACK information) from terminal 200 received via antenna 104, and outputs the signal after the reception processing to demodulator/decoder 106.

Demodulator/decoder 106 performs, for example, channel estimation, demodulation processing, and decoding processing on the received signal inputted from radio receiver 105. When the received signal is data, demodulator/decoder 106 outputs the received data, and when the received signal is HARQ-ACK information, demodulator/decoder 106 outputs the HARQ-ACK information to HARQ-ACK determiner 107, for example.

HARQ-ACK determiner 107, for example, determines the presence or absence of an error (e.g., ACK or NACK) for each transmission data (e.g., transport block) that has been transmitted, based on the HARQ-ACK information inputted from demodulator/decoder 106. For example, when the HARQ-ACK information is NACK, HARQ-ACK determiner 107 may indicate retransmission of data to retransmission controller 108. Further, for example, when the HARQ-ACK information is ACK, HARQ-ACK determiner 107 may indicate non-retransmission of data to retransmission controller 108. Furthermore, for example, HARQ-ACK determiner 107 may determine that the HARQ-ACK information is NACK when no HARQ-ACK information is received from terminal 200.

Retransmission controller 108, for example, controls retransmission of transmission data (e.g., PDSCH). For example, retransmission controller 108 may generate information on retransmission control including at least one of a HARQ process ID, an NDI, an RV, information indicating a HARQ-ACK transmission timing (e.g., PDSCH-to-HARQ_feedback timinig indicator), and DAI (C-DAI, T-DAI) for transmission data. Retransmission controller 108 outputs the generated information on retransmission control to encoder/modulator 102.

Retransmission controller 108 may, for example, determine retransmission of transmission data (or transmission of new data) based on the information inputted from HARQ-ACK determiner 107, and indicate whether transmission data to be retransmitted to encoder/modulator 102. For example, retransmission controller 108 indicates retransmission of data to encoder/modulator 102 when the information indicates NACK. Further, in case of a HARQ-feedback-disabled HARQ process, for example, retransmission controller 108 may indicate, to encoder/modulator 102, retransmission of data for the specified (or configured) number of times, regardless of HARQ-ACK information.

### [Configuration of Terminal]

Next, an exemplary configuration of terminal 200 will be described.

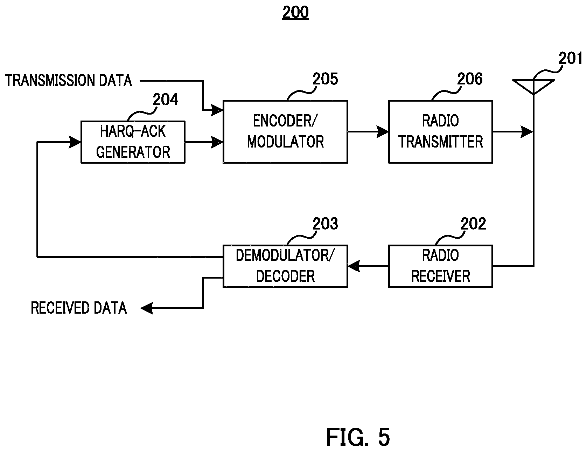

FIG. 5 is a block diagram illustrating an exemplary configuration of terminal 200 according to the present embodiment. Terminal 200 includes, for example, antenna 201, radio receiver 202, demodulator/decoder 203, HARQ-ACK generator 204, encoder/modulator 205, and radio transmitter 206.

For example, at least one of demodulator/decoder 203, HARQ-ACK generator 204, and encoder/modulator 205 illustrated in FIG. 5 may be included in the controller illustrated in FIG. 3. Further, at least one of antenna 201 and radio transmitter 206 illustrated in FIG. 5 may be included in the transmitter illustrated in FIG. 3, for example.

Radio receiver 202 performs, for example, reception processing such as downconversion and A/D conversion on a data signal (e.g., PDSCH) and a control signal (e.g., PDCCH or DCI) from base station 100 received via antenna 201, and outputs the signal after the reception processing to demodulator/decoder 203.

Demodulator/decoder 203 performs, for example, channel estimation, demodulation processing, and decoding processing on the received signal inputted from radio receiver 202. When the received signal is data, demodulator/decoder 203 may perform processing based on data assignment information (e.g., modulation scheme and coding rate) included in the control signal, for example. When receiving a control signal (e.g., PDCCH), demodulator/decoder 203 may descramble the control signal (e.g., CRC part of PDCCH) using an identifier (e.g., RNTI such as C-RNTI or CS RNTI) assigned to terminal 200. Then, demodulator/decoder 203 identifies a modulation scheme and coding rate based on the data assignment information included in the detected control signal to perform processing.

Further, demodulator/decoder 203 may determine whether the received data is initial transmission data or retransmission data, based on the NDI included in the control signal, for example. For example, when the received data is initial transmission data, demodulator/decoder 203 may perform error correction decoding and CRC determination. For example, when the received data is retransmission data, demodulator/decoder 203 may perform error correction decoding after combining the data stored in a buffer (past received data) with the received data, and perform CRC determination. Demodulator/decoder 203 outputs the CRC determination result to HARQ-ACK generator 204, for example.

HARQ-ACK generator 204 generates HARQ-ACK information (e.g., HARQ-ACK codebook) based on the CRC determination result inputted from demodulator/decoder 203 and outputs the generated information to encoder/modulator 205, for example.

For example, HARQ-ACK generator 204 may generate HARQ-ACK information based on a feedback enabling/disabling configuration. Note that the determination of the feedback enabling/disabling configuration will be described later.

For example, HARQ-ACK generator 204 generates HARQ-ACK information (e.g., ACK or NACK) based on the CRC determination result for data to which enabling of feedback is configured. For example, HARQ-ACK generator 204 generates an ACK in case of CRC OK (e.g., no error) and generates a NACK in case of CRC NG (Not Good, e.g., with error). Further, for example, when terminal 200 receives a plurality of transport blocks or code blocks, HARQ-ACK generator 204 may generate a HARQ-ACK for each of the plurality of transport blocks or code blocks or generate a HARQ-ACK code block composed of a plurality of HARQ-ACKs.

On the other hand, for example, HARQ-ACK generator 204 may generate no HARQ-ACK information for feedback-disabled data (or data in feedback-disabled HARQ process). Note that terminal 200 need not transmit HARQ-ACK information generated for the feedback-disabled data.

Encoder/modulator 205 performs, for example, error correction coding and modulation processing on inputted transmission data (e.g., transport block), and outputs the modulated signal to radio transmitter 206. Encoder/modulator 205 also performs, for example, error correction coding and modulation processing on the HARQ-ACK information inputted from HARQ-ACK generator 204, for example, and outputs the modulated signal to radio transmitter 206.

For example, radio transmitter 206 performs transmission processing such as D/A conversion, up-conversion, and amplification on the signal inputted from encoder/modulator 205, and transmits the radio signal after the transmission processing from antenna 201.

Terminal 200 may transmit the HARQ-ACK information at a timing based on the PDSCH-to-HARQ_feedback timing indicator included in the control signal from base station 100, for example.

### [Exemplary Operations of Base Station and Terminal]

Next, exemplary operations of base station 100 and terminal 200 will be described.

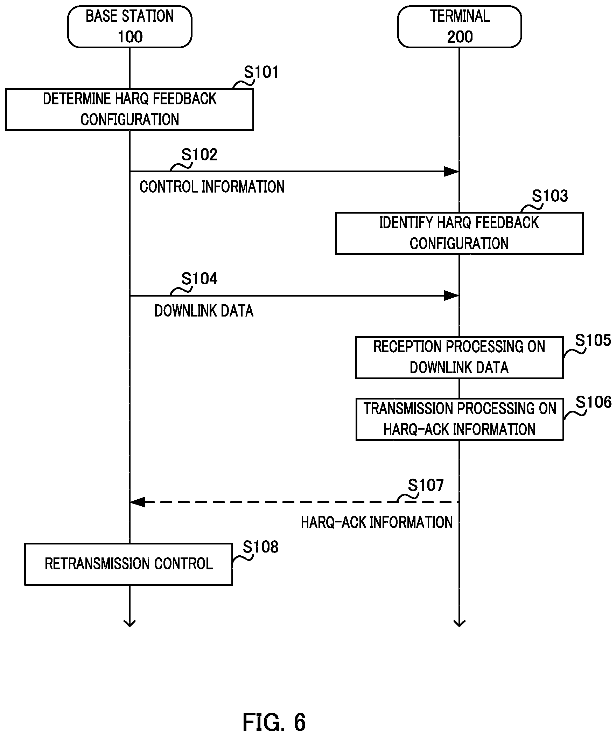

FIG. 6 is a sequence diagram illustrating exemplary operations of base station 100 and terminal 200 in the present embodiment.

In FIG. 6, base station 100 determines a HARQ feedback configuration for terminal 200, for example (S101). The HARQ feedback configuration may include a feedback enabling/disabling configuration per HARQ process and a feedback enabling/disabling configuration per SPS configuration (e.g., SPS config), for example.

Base station 100 transmits control information to terminal 200, for example (S102). The control information may include information on the HARQ feedback configuration or data assignment information. Note that these pieces of information may be collectively transmitted to terminal 200 by at least one of RRC signaling, MAC Control Element (MAC CE), and a PDCCH, or may be transmitted to terminal 200 at different timings.

Terminal 200 identifies the HARQ feedback configuration based on the control information (S103).

Base station 100 transmits downlink data to terminal 200, for example (S104). Terminal 200 receives the downlink data based on, for example, the data assignment information included in the control information (S105).

Terminal 200 performs transmission processing on HARQ-ACK information for the downlink data based on the HARQ feedback configuration included in the control information, for example (S106). For example, terminal 200 may determine whether to transmit HARQ-ACK information.

For example, when HARQ feedback is enabled, terminal 200 transmits HARQ-ACK information to base station 100, and when HARQ feedback is disabled, terminal 200 stops transmission of HARQ-ACK information (S107).

Base station 100 performs retransmission control of downlink data for terminal 200 (S108). For example, base station 100 may perform retransmission control based on the HARQ-ACK information from terminal 200, or may perform retransmission control regardless of the HARQ-ACK information from terminal 200.

### [Exemplary Configuration of Feedback Enabling/Disabling]

Next, an exemplary configuration of enabling/disabling of feedback and an exemplary method for determining enabling and disabling of feedback for terminal 200 will be described.

Base station 100 may indicate, to terminal 200, information on a feedback enabling/disabling configuration per HARQ process ID (e.g., HARQprocess-disableULfeedback) by RRC signaling (e.g., RRC reconfiguration message).

Further, base station 100 may indicate, to terminal 200, information on SPS configuration (e.g., SPS-Config) corresponding to a request condition or characteristic of QoS of communication traffic with each terminal 200, for example.

For example, base station 100 may indicate the information on SPS configuration to terminal 200 that uses an application periodically generating the same amount of data, such as a voice call or a video transmission. The information on SPS configuration may include, for example, an SPS transmission period (periodicity), the number of HARQ processes (nrofHARQ-Processes), a process number offset (harq-ProcID-Offset), and a feedback enabling/disabling configuration for SPS transmission (e.g., HARQfeedback).

Further, for example, in such a case where communication by a plurality of applications is simultaneously performed, base station 100 may indicate a plurality (a plurality of sets) of SPS configurations to terminal 200.

Hereinafter, a case where a single SPS configuration is indicated to terminal 200 and a case where a plurality of SPS configurations is indicated to terminal 200 will be described.

### <Operation Example 1>

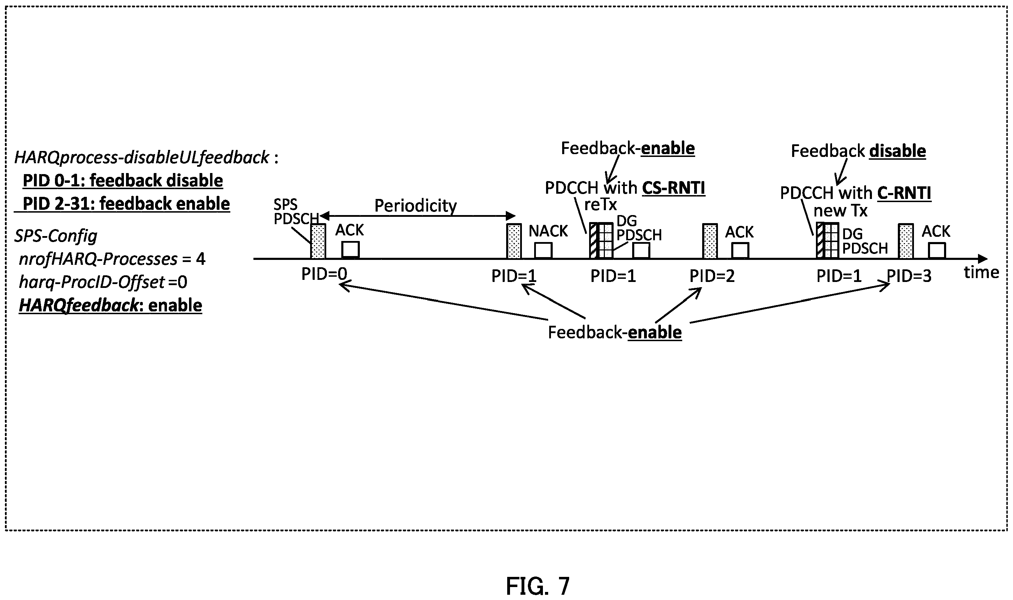

FIG.7 illustrates an exemplary feedback configuration when a single SPS configuration is indicated to terminal 200.

In the example illustrated in FIG. 7, in the feedback enabling/disabling configuration per HARQ process ID (HARQprocess-disableULfeedback), disabling of feedback (feedback disable) is configured to HARQ process ID (PID)=0 and 1, and enabling of feedback (feedback enable) is configure to PID=2 to 31.

Further, in the example illustrated in FIG. 7, for the SPS configuration (SPS-Config), the number of HARQ processes (nrofHARQ-Processes) is set to 4, the HARQ process ID offset (harq-ProcID-Offset) is set to 0, and the feedback enabling/disabling configuration (HARQfeedback) for SPS is set to "enable."

In the example illustrated in FIG. 7, a PID of PDSCH transmitted by SPS (SPS PDSCH) takes any of PID=0, 1, 2, and 3 depending on the transmission slot (e.g., CURRENT_slot), according to the above-described equation for calculating PID for SPS. Further, in the example illustrated in FIG. 7, a PID in case of transmission different from SPS transmission (e.g., dynamic scheduling) is indicated to terminal 200 by, for example, a PDCCH corresponding to (or associated with) each PDSCH.

For example, to HARQ feedback for SPS, a configuration based on the feedback enabling/disabling configuration (e.g., HARQfeedback) for SPS transmission in the SPS configuration (SPS-Config) is applied. In the example illustrated in FIG. 7, since the HARQ feedback (HARQfeedback) in SPS configuration is configured to be enabled, terminal 200 transmits HARQ-ACK information (ACK or NACK) after receiving each SPS PDSCH.

Further, in case of transmission different from SPS transmission (e.g., dynamic scheduling), terminal 200 may determine HARQ feedback of dynamic scheduling based on the type of RNTI used for a PDCCH scheduling a PDSCH (e.g., DG PDSCH) (e.g., RNTI used for scrambling CRC part). For example, when C-RNTI is used, a set value in accordance with the feedback enabling/disabling configuration per HARQ process (or HARQ process ID) (HARQprocess-disableULfeedback) may be applied. Further, for example, when CS-RNTI is used, a set value in accordance with the feedback enabling/disabling configuration (HARQfeedback) per SPS configuration may be applied.

In the example illustrated in FIG. 7, when C-RNTI is used for a PDCCH that schedules a PDSCH corresponding to PID=1 (PDCCH with C-RNTI), base station 100 and terminal 200 may configure disabling of feedback in accordance with the feedback enabling/disabling configuration per HARQ process ID (HARQprocess-disableULfeedback). In this case, terminal 200 need not transmit HARQ-ACK information for the PDSCH. Further, base station 100 may, for example, perform retransmission control, assuming that HARQ-ACK information for the PDSCH is not transmitted.

Furthermore, in the example illustrated in FIG. 7, when CS-RNTI is used for a PDCCH that schedules a PDSCH corresponding to PID=1 (PDCCH with CS-RNTI), base station 100 and terminal 200 may configure enabling of HARQ feedback in accordance with the feedback enabling/disabling configuration (HARQfeedback) per SPS configuration. In this case, terminal 200 may transmit HARQ-ACK information for the PDSCH. Then, base station 100 may, for example, receive HARQ-ACK information for the PDSCH and perform retransmission control based on the received HARQ-ACK information.

Note that, when CS-RNTI is used for a PDCCH scheduling a PDSCH and the PDCCH indicates a PID that is not configured for SPS, base station 100 and terminal 200 may configure HARQ feedback in accordance with the feedback enabling/disabling configuration per HARQ process ID. In other words, when CS-RNTI is used for a PDCCH scheduling a PDSCH and the PDCCH indicates a PID that is configured for SPS, base station 100 and terminal 200 may configure HARQ feedback in accordance with the feedback enabling/disabling configuration per SPS configuration. Alternatively, when CS-RNTI is used for a PDCCH scheduling a PDSCH and the PDCCH indicates a PID that is not configured for SPS, terminal 200 may determine that the PDCCH is disabled and may discard the PDCCH.

As described above, base station 100 and terminal 200 may determine a feedback enabling/disabling configuration for a PDSCH scheduled by dynamic scheduling (e.g., DG PDSCH), based on the type of RNTI used for a PDCCH performing dynamic scheduling. For example, when the type of RNTI is CS-RNTI, base station 100 and terminal 200 may determine a feedback enabling/disabling configuration configured per SPS configuration as the feedback enabling/disabling configuration for the DG PDSCH. Further, for example, when the type of RNTI is C-RNTI, base station 100 and terminal 200 may determine a feedback enabling/disabling configuration configured per HARQ process as the feedback enabling/disabling configuration for the DG PDSCH.

As described above, CS-RNTI is used for scrambling a PDCCH that schedules a PDSCH used for retransmission of data that is SPS-transmitted. Thus, by determining the feedback enabling/disabling configuration in accordance with the feedback enabling/disabling configuration for SPS transmission (HARQfeedback) in the case where the type of RNTI is CS-RNTI, terminal 200 can apply the same feedback enabling/disabling configuration to both initial transmission and retransmission for SPS data transmission. For example, in FIG. 7, enabling of HARQ feedback is configured for an SPS PDSCH (e.g., periodic transmissions by SPS) and enabling of HARQ feedback is configured for a DG PDSCH used for SPS retransmission. Thus, for example, the same HARQ feedback configuration (enable or disable) as configured for SPS periodic transmission is applied to retransmission of SPS data, which allows SPS data transmission that satisfies QoS requirement.

Further, as described above, C-RNTI is used for scrambling a PDCCH that schedules a PDSCH used for transmission (or retransmission) of data different from data that is SPS-transmitted. Thus, by determining the feedback enabling/disabling configuration in accordance with the feedback enabling/disabling configuration per HARQ process in the case where the type of RNTI is C-RNTI, terminal 200 can perform, regardless of SPS configuration, communication by a feedback enabling/disabling configuration that depends on the characteristic of the traffic using dynamic scheduling.

Further, by following the feedback enabling/disabling configuration per HARQ process regardless of SPS configuration when C-RNTI is used for a PDCCH that schedules a PDSCH, it can be avoided that the HARQ feedback configuration for dynamic scheduling varies (or is changed) in a period before or after SPS configuration is indicated to terminal 200. Therefore, it is possible to avoid inconsistencies in recognition between base station 100 and terminal 200, and to realize simple operations in base station 100 and terminal 200.

### <Operation Example 2>

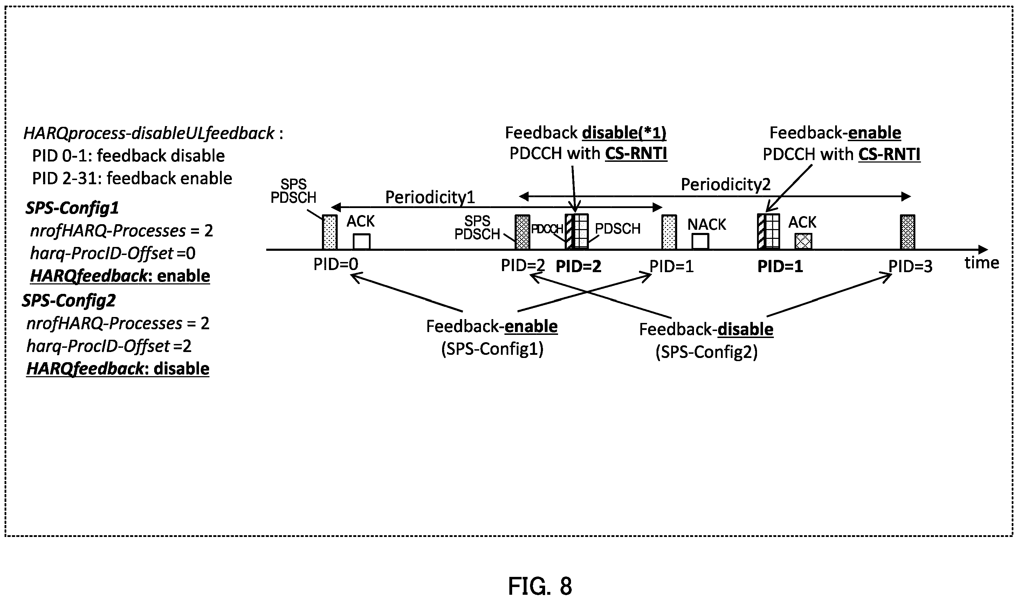

FIG. 8 illustrates an exemplary feedback configuration when a plurality of SPS configurations is indicated to terminal 200.

In the example illustrated in FIG. 8, similarly to FIG. 7, disabling of feedback (feedback disable) is configured to PID=0 and 1, and enabling of feedback (feedback enable) is configure to PID=2 to 31 in the feedback enabling/disabling configuration per HARQ process ID (HARQprocess-disableULfeedback).

Further, in the example illustrated in FIG. 8, two SPS configurations (SPS-Config1 and SPS-Config2) are configured for terminal 200. The SPS configurations may be identified, for example, by an SPS configuration index (e.g., sps-ConfigIndex).

For example, for SPS-Config1, the number of HARQ processes (nrofHARQ-Processes) is set to 2, the HARQ process ID offset (harq-ProcID-Offset) is set to 0, and the feedback enabling/disabling configuration (HARQfeedback) for SPS is set to "enable." For example, for SPS-Config2, the number of HARQ processes (nrofHARQ-Processes) is set to 2, the HARQ process ID offset (harq-ProcID-Offset) is set to 2, and the feedback enabling/disabling configuration (HARQfeedback) for SPS is set to "disable."

Thus, in the example illustrated in FIG. 8, SPS-Config1 of SPS transmission takes any value of PID=0 and 1, and SPS-Config2 of SPS transmission takes any value of PID=2 and 3 offset by 2 from 0.

For example, for HARQ feedback for SPS, a configuration based on the feedback enabling/disabling configuration for SPS transmission (e.g., HARQfeedback) in each of SPS configurations (e.g., SPS-Config1 and SPS-Config2) is applied. In the example illustrated in FIG. 8, since the HARQ feedback (HARQfeedback) in SPS-Config1 is configured as enabled, terminal 200 transmits HARQ-ACK information (ACK or NACK) after receiving each SPS PDSCH. Further, in the example illustrated in FIG. 8, since the HARQ feedback (HARQfeedback) in SPS-Config2 is configured as disabled, terminal 200 transmits no HARQfeedcabk information after receiving each SPS PDSCH.

Furthermore, in case of transmission different from SPS transmission (e.g., dynamic scheduling), terminal 200 may determine the HARQ feedback configuration of dynamic scheduling based on the type of RNTI used for a PDCCH scheduling a PDSCH (e.g., DG PDSCH) (e.g., RNTI used for scrambling CRC part). Note that the operation in which CS-RNTI is applied in the case where there is a plurality of SPS configurations may be different from the operation with the single SPS configuration described in Operation Example 1.

For example, when C-RNTI is used, a set value in accordance with the feedback enabling/disabling configuration per HARQ process (or HARQ process ID) may be applied (HARQprocess-disableULfeedback).

Further, for example, when CS-RNTI is used, a set value in accordance with the feedback enabling/disabling configuration for SPS transmission (HARQfeedback) corresponding to the SPS configuration (or SPS configuration index) in which the HARQ process ID (PID) indicated by a PDCCH is configured may be applied. In other words, when CS-RNTI is used, terminal 200 may determine, among respective feedback enabling/disabling configurations for a plurality of SPS configurations, the feedback enabling/disabling configuration in the SPS configuration corresponding to the HARQ process ID used for dynamic scheduling as the feedback enabling/disabling configuration in the dynamic scheduling.

In the example illustrated in FIG. 8, when CS-RNTI is used for a PDCCH scheduling a PDSCH corresponding to PID=1, base station 100 and terminal 200 may configure enabling of feedback in accordance with the feedback enabling/disabling configuration for SPS transmission in SPS-Config1 for which PID=1 is configured. In this case, terminal 200 may transmit HARQ-ACK information for the PDSCH. Further, base station 100 may, for example, receive HARQ-ACK information for the PDSCH and perform retransmission control based on the received HARQ-ACK information.

Further, in the example illustrated in FIG. 8, when CS-RNTI is used for a PDCCH scheduling a PDSCH corresponding to PID=2, base station 100 and terminal 200 may configure disabling of feedback in accordance with the feedback enabling/disabling configuration for SPS transmission in SPS-Config2 for which PID=2 is configured. In this case, terminal 200 need not transmit HARQ-ACK information for the PDSCH. Further, base station 100 may, for example, perform retransmission control, assuming that information on HARQ-ACK for the PDSCH is not transmitted.

Note that base station 100 may indicate PDSCH allocation for retransmission to a feedback-disabled SPS PDSCH (SPS PDSCH for which corresponding HARQ-ACK information is not transmitted) by a PDCCH for which CS-RNTI is used. This can realize blind retransmission, in which retransmission data is transmitted for SPS data transmission without HARQ feedback.

As described above, base station 100 and terminal 200 may determine a feedback enabling/disabling configuration for a PDSCH (e.g., DG PDSCH) scheduled by dynamic scheduling, based on the type of RNTI used for a PDCCH performing dynamic scheduling. Further, when a plurality of SPS configurations is configured for terminal 200, base station 100 and terminal 200 may determine a feedback enabling/disabling configuration for an SPS PDSCH scheduled by a PDCCH based on the feedback enabling/disabling configuration for the SPS configuration corresponding to the HARQ process ID indicated by the PDCCH.

Thus, even when there is a plurality of SPS configurations for which HARQ feedback enabling/disabling configurations are different from each other, for example, the same feedback enabling/disabling configuration can be applied to both initial transmission and retransmission for data transmission for SPS of the same SPS configuration index. For example, in FIG. 8, enabling of feedback is configured for PDSCH transmission of SPS-Config1 (PID=0 or 1) in both periodic transmission by SPS and retransmission by dynamic scheduling. Similarly, disabling of feedback is configured for PDSCH transmission of SPS-Config2 (PID=2 or 3) in both periodic transmission by SPS and retransmission by dynamic scheduling. Thus, for example, the same HARQ feedback configuration (enable or disable) as configured for SPS periodic transmission is applied to retransmission of SPS data, which allows SPS data transmission that satisfies QoS requirement.

Note that, even when there is a plurality of SPS configurations, the feedback enabling/disabling configuration (or interpretation) for a PDSCH scheduled by a PDCCH scrambled by C-RNTI is the same as that in the case where there is a single SPS configuration as described in Operation Example 1. As described above, by following the feedback enabling/disabling configuration per HARQ process regardless of SPS configuration when C-RNTI is used for a PDCCH that schedules a PDSCH, it can be avoided that the HARQ feedback configuration for dynamic scheduling varies in a period before or after SPS configuration is indicated to terminal 200. Therefore, it is possible to avoid inconsistencies in recognition between base station 100 and terminal 200, and to realize simple operations in base station 100 and terminal 200.

The exemplary operation of base station 100 and terminal 200 has been described above.

As described above, in the present embodiment, base station 100 and terminal 200 determine a configuration related to enabling and disabling of HARQ feedback of dynamic scheduling based on the type of RNTI used for a PDCCH performing dynamic scheduling. Then, terminal 200 performs transmission processing (e.g., determination of transmission and non-transmission) on HARQ-ACK information based on the determined configuration of enabling and disabling of HARQ feedback, and base station 100 performs reception processing (e.g., determination of reception and non-reception) on the HARQ-ACK information based on the determined configuration of enabling and disabling of HARQ feedback.

Thus, for example, base station 100 and terminal 200 can appropriately determine the feedback enabling/disabling configuration even when the feedback enabling/disabling configuration per HARQ process for a certain HARQ process ID and the feedback enabling/disabling configuration per SPS configuration is different from each other. Therefore, according to the present embodiment, it is possible to improve the efficiency of retransmission control by HARQ.

### (Embodiment 2)

In the present embodiment, configurations of the base station and the terminal may be the same as those of base station 100 and terminal 200 in Embodiment 1.

In the present embodiment, the operation when the type of RNTI used for scrambling CRC part of PDCCH used for scheduling PDSCH is CS-RNTI may be the same as that in Embodiment 1.

In the present embodiment, the operation related to the feedback enabling/disabling configuration (or interpretation) when the type of RNTI used for scrambling CRC part of PDCCH used for scheduling PDSCH is C-RNTI is different from that in Embodiment 1.

For example, when the type of RNTI used for scrambling CRC part of PDCCH used for scheduling PDSCH is C-RNTI, base station 100 and terminal 200 may determine a feedback enabling/disabling configuration based on a HARQ process ID indicated to terminal 200 by the PDCCH (in other words, HARQ process ID used for dynamic scheduling). For example, base station 100 and terminal 200 may determine a feedback enabling/disabling configuration depending on whether the HARQ process ID used for dynamic scheduling is a HARQ process ID used for SPS transmission.

For example, enabling/disabling of feedback is configured to a PDSCH scheduled by a PDCCH scrambled by C-RNTI, depending on a HARQ process ID indicated by the PDCCH (or HARQ process ID configured to the PDSCH). For example, when the HARQ process ID indicated by the PDCCH is a HARQ process ID that is not used for SPS transmission, terminal 200 may apply the feedback enabling/disabling configuration per HARQ process. Further, for example, when the HARQ process ID indicated by the PDCCH is a HARQ process ID that is used for SPS transmission, terminal 200 may apply the feedback enabling/disabling configuration of the SPS configuration.

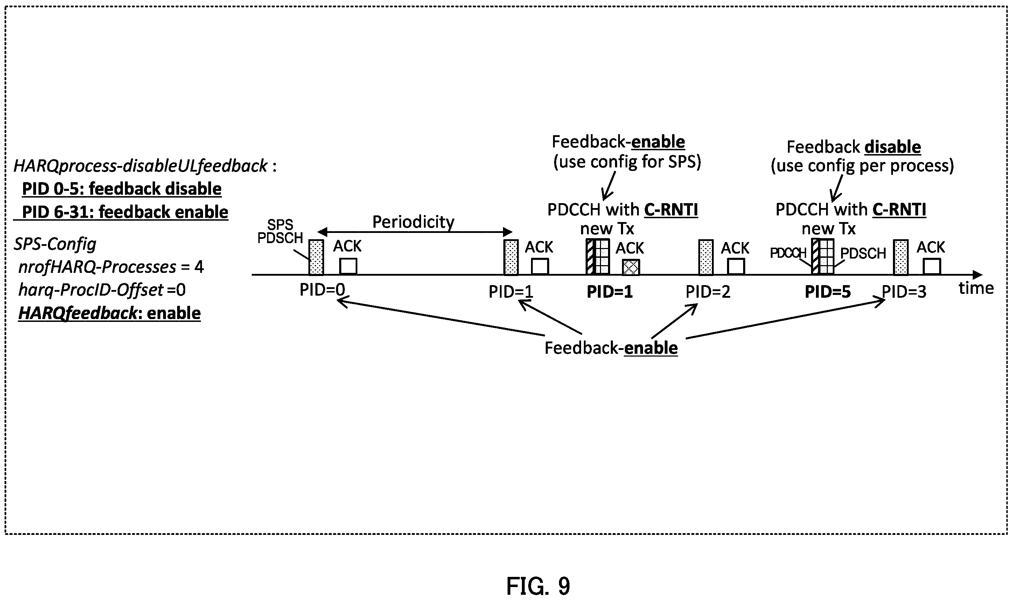

FIG. 9 illustrates an exemplary feedback configuration.

In the exemplary embodiment illustrated in FIG. 9, disabling of feedback (feedback disable) is configured to PID=0 to 5 and enabling of feedback (feedback enable) is configure to PID=6 to 31 in the feedback enabling/disabling configuration per HARQ process ID (HARQprocess-disableULfeedback).

Further, in the example illustrated in FIG. 9, for SPS configuration (SPS-Config), the number of HARQ processes (nrofHARQ-Processes) is set to 4, the HARQ process ID offset (harq-ProcID-Offset) is set to 0, and the feedback enabling/disabling configuration (HARQfeedback) for SPS is set to "enable."

For example, a case will be described where a PDSCH is scheduled by a PDCCH that is scrambled by C-RNTI and indicates PID=1 in FIG. 9. In this case, PID=1 is used for HARQ process ID with SPS configuration (PID= 0 to 3), so that terminal 200 may configure enabling of feedback for the PDSCH in accordance with the feedback enabling/disabling configuration of the SPS configuration.

Further, for example, a case will be described where a PDSCH is scheduled by a PDCCH that is scrambled by C-RNTI and indicates PID=5 in FIG. 9. In this case, PID=5 is not used for HARQ process ID with SPS configuration (PID= 0 to 3), so that terminal 200 may configure disabling of feedback for the PDSCH in accordance with the feedback enabling/disabling configuration per HARQ process.

Thus, the same feedback enabling/disabling configuration is applied to the same HARQ process regardless of whether the scheduling is dynamic scheduling or SPS. For example, in FIG. 9, enabling of feedback is configured to a PDSCH for which PID=1 is configured in both SPS and dynamic scheduling.

The HARQ process ID may be herein used as a unit of buffer management in HARQ. Thus, buffer management is likely to be complicated when different feedback configurations are applied to the same HARQ process ID. In the present embodiment, for example, the same feedback configuration is applied to both SPS transmission and transmission by dynamic scheduling corresponding to the same HARQ process ID, which can simplify buffer management of HARQ in terminal 200 and base station 100.

Note that, to a HARQ process ID used in SPS (e.g., HARQ process ID configured in SPS-Config), the feedback enabling/disabling configuration of SPS configuration may be applied in a period where SPS is activated, and the feedback enabling/disabling configuration per HARQ process may be applied in a period different from the period where SPS is activated (e.g., period where SPS is deactivated).

Accordingly, in a period where SPS PDSCHs may be transmitted, applying the same HARQ feedback configuration as SPS can simplify buffer management of HARQ. Further, in a period where SPS PDSCHs are not transmitted, a HARQ feedback configuration suitable for dynamic scheduling can be used by applying the HARQ feedback configuration per HARQ process.

### (Embodiment 3)

In the present embodiment, configurations of the base station and the terminal may be the same as those of base station 100 and terminal 200 in Embodiment 1.

In the present embodiment, other operations including HARQ feedback configurations for PSDCHs scheduled by PDCCHs scrambled by C-RNTI and CS-RNTI may be operations based on at least one of Embodiments 1 and 2, for example.

In Embodiments 1 and 2, cases has been described in which the feedback enabling/disabling configuration per SPS configuration (e.g., HARQfeedback) is explicitly indicated to terminal 200. In the present embodiment, the feedback enabling/disabling configuration per SPS configuration may be implicitly indicated to terminal 200.

The feedback enabling/disabling configuration per SPS configuration may be determined based on, for example, one HARQ process ID (e.g., referred to as a particular HARQ process ID) among HARQ process IDs used for SPS configuration (SPS-Config). For example, the feedback enabling/disabling configuration per SPS configuration may be determined based on a set value corresponding to the above-described particular HARQ process ID in the feedback enabling/disabling configuration per HARQ process ID.

The particular HARQ process ID may be herein the minimum HARQ process ID, the maximum process ID, or a separately specified HARQ process ID, among HARQ process IDs included in SPS configuration, for example.

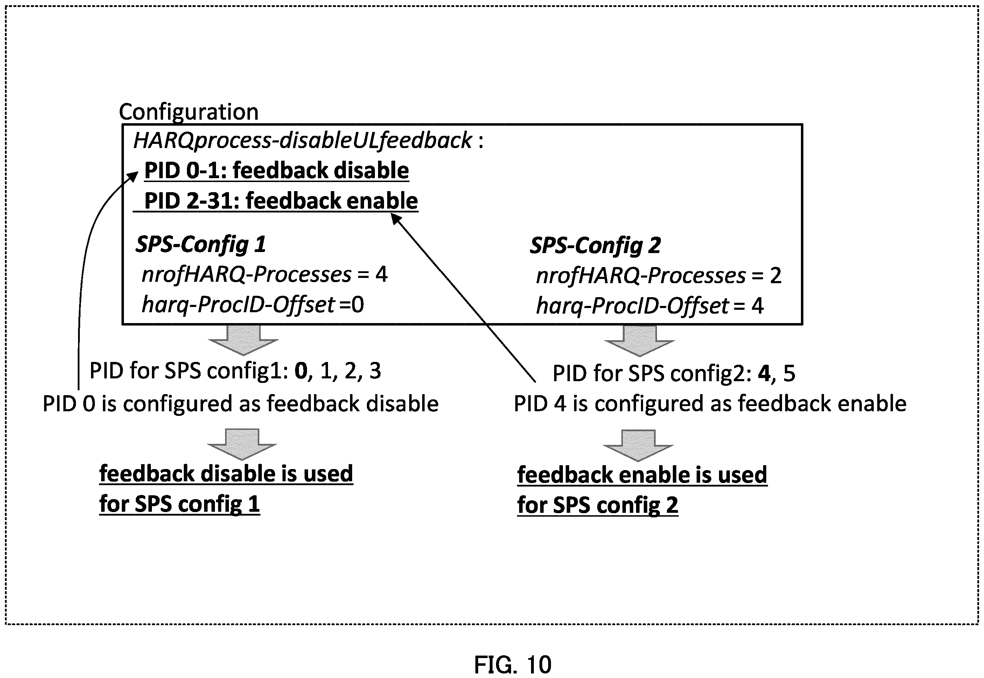

FIG. 10 illustrates an exemplary feedback configuration. In FIG. 10, a case will be described in which the minimum HARQ process ID among HARQ process IDs in SPS configuration is the particular HARQ process ID.

For example, in FIG. 10, in the feedback enabling/disabling configuration per HARQ process, disabling of feedback is configured to PID=0 to 1, and enabling of feedback is configured to PID=2 to 31.

In FIG. 10, two SPS configurations (e.g., SPS-Config1 and SPS-Config2) are exemplarily configured. For example, in SPS-config1, the number of HARQ processes is set to 4 and the HARQ process ID offset is set to 0. For example, in SPS-Config2, the number of HARQ processes is set to 2 and the HARQ process ID offset is set to 4. Thus, as illustrated in FIG. 10, for SPS transmission of SPS-config1, any of PID=0, 1, 2, and 3 is used, and for SPS transmissions of SPS-config2, any of the two PIDs of PID=4 and 5 offset by 4 from 0 is used.

Terminal 200 may configure, to SPS-Config1, "feedback disable" corresponding to PID=0, which is the minimum PID of SPS-Config1 in the HARQ feedback configuration per HARQ process, for example. Further, terminal 200 may configure, to SPS-Config2, "feedback enable" corresponding to PID=4, which is the minimum PID of SPS-Config2 in the HARQ feedback configuration per HARQ process, for example.

As described above, terminal 200 determines the HARQ feedback configuration of SPS configuration based on the HARQ feedback configuration per HARQ process and the particular HARQ process ID in the SPS configuration.

Thus, according to the present embodiment, base station 100 can indicate or configure the HARQ feedback configuration per SPS configuration to terminal 200 without adding a parameter for HARQ feedback in SPS configuration, which reduces overhead of indication.

Further, according to the present embodiment, it is possible to reduce a change in a RRC parameter specification from that of the NR Rel.15/16 standard, which can simplify terminal 200.

### (Embodiment 4)

In the present embodiment, configurations of the base station and the terminal may be the same as those of base station 100 and terminal 200 in Embodiment 1.

In the present embodiment, for example, the usage of the PDCCH scrambled by CS-RNTI is different from that in Embodiments 1 to 3. For example, the operations related to the HARQ feedback configuration per HARQ process, the HARQ feedback configuration per SPS configuration, and the HARQ feedback configuration for a PDSCH scheduled by a PDCCH scrambled by C-RNTI may be operations based on at least one of Embodiments 1 to 3.

For example, base station 100 and terminal 200 need not perform retransmission processing for an SPS PDSCH for which disabling of HARQ feedback is configured. For example, base station 100 need not perform transmission processing on retransmission data in SPS when disabling of feedback is configured in the feedback enabling/disabling configuration per SPS configuration. For example, terminal 200 need not perform reception processing on retransmission data in SPS when disabling of feedback is configured in the feedback enabling/disabling configuration per SPS configuration.

Thus, for example, a PDCCH scrambled by CS-RNTI may be used for scheduling retransmission of an SPS PDSCH for which enabling of feedback is configured and need not used for an SPS PDSCH for which disabling of feedback is configured. In other words, enabling of feedback may be configured to a PDSCH scheduled by a PDCCH scrambled by CS-RNTI, and disabling of feedback need not be configured to the PDSCH.

Note that the PDCCH scrambled by CS-RNTI indicates SPS activation or deactivation, for example, in case of NDI=0 in NR Rel.15/16. Thus, among PDCCHs scrambled by CS-RNTI, a PDCCH to which NDI=1 is configured may be used for scheduling retransmission of a feedback-enabled SPS PDSCH.

Accordingly, enabling of HARQ feedback may be, for example, always configured to a PDSCH scheduled by a PDCCH scrambled by CS-RNTI, which can simplify the operations of terminal 200 and base station 100.

Note that, in the present embodiment, retransmission processing is not performed for an SPS PDSCH for which feedback is disabled, but for example, repetitive transmission (e.g., Repetition or PDSCH Aggregation) may be configured for the SPS PDSCH. Repetitive transmission of the SPS PDSCH allows a plurality of transmissions of the SPS PDSCH, thereby suppressing deterioration of property such as reliability of SPS PDSCH caused by not performing a retransmission process. Note that, for example, the configuration of repetitive transmission may be pre-configured in terminal 200 by RRC signaling, or may be indicated to terminal 200 by a PDCCH or DCI.

Further, the specification of operation according to the present embodiment may be described as the following example.

Example 1: For an SPS configuration in which HARQ feedback is disabled, a terminal does not expect (or assume) to receive a retransmission of a PDSCH associated with the SPS configuration.

Example 2: For an SPS configuration in which HARQ feedback is disabled, a terminal does not expect (or assume) to receive a PDCCH that is scrambled by CS-RNTI and for which NDI=1 is configured.

Example 3: For an SPS configuration in which HARQ feedback is disabled, a terminal ignores (or discards) a PDCCH that is scrambled by CS-RNTI and for which NDI=1 is configured.

Example 4: A terminal does not expect (or assume) to receive a PDCCH that is scrambled by CS-RNTI, for which NDI=1 is configured, and that indicates the same HARQ process ID as of a PDSCH that is scheduled by SPS and for which HARQ feedback is disabled.

Example 5: Aterminal ignores (or discards) a PDCCH that is scrambled by CS-RNTI, for which NDI=1 is configured, and that indicates the same HARQ process ID as of a PDSCH that is scheduled by SPS and for which HARQ feedback is disabled.

Examples 4 and 5 are also applicable when the feedback enabling/disabling configuration per SPS configuration is not performed.

The embodiments of the present disclosure have been described above.

Note that at least two of Embodiments 1, 2, 3, and 4 may be used in combination. For example, by combining Embodiments 1 and 2, a feedback enabling/disabling configuration is determined based on Embodiment 1 for a PDSCH scheduled by a PDCCH scrambled by CS-RNTI, and a feedback enabling/disabling configuration is determined based on Embodiment 2 for a PDSCH scheduled by a PDCCH scrambled by C-RNTI.

Further, for example, in the above-described combination of Embodiments 1 and 2, the feedback enabling/disabling configuration per SPS configuration may be configured (implicitly indicated) based on the feedback enabling/disabling configuration per HARQ process, based on Embodiment 3. Further, for example, in the above-described combination of Embodiments 1 and 2 (or the combination of Embodiment 1 to 3), transmission processing on retransmission data in SPS need not be performed when disabling of feedback is configured in the feedback enabling/disabling configuration per SPS configuration, based on Embodiment 4.

Further, an exemplary embodiment of the present disclosure is also applicable to any type of satellite, such as GEOs, medium orbit satellites (Medium Earth Orbit (MEO) satellites), LEOs, or high orbit satellites (Highly Elliptical Orbit (HEO) satellites). Further, an exemplary embodiment of the present disclosure may be applied to non-terrestrial communications such as a HAPS or a drone base station.

Further, the above embodiments have been described by taking an NTN environment (e.g., satellite communication environment) as an example, but the present disclosure is not limited thereto. The present disclosure may be applied to other communication environments (e.g., terrestrial cellular environment of at least one of LTE and NR). For example, an embodiment of the present disclosure may be applied to terrestrial communications in an environment where a cell size is large and a propagation delay between base station 100 and terminal 200 is longer (e.g., equal to or longer than a threshold), for example. Further, an embodiment of the present disclosure may be applied not only to the NTN but also to communications to which HARQ or feedback-disabled HARQ is applied. Further, for example, in terrestrial communications, as a slot length (transmission time unit) is shorter, such as in case of a communication using a high frequency such as a millimeter wave or a terahertz wave, an RTT (including processing delays) is relatively longer. The feedback enabling/disabling configuration is assumed to be applied, and an embodiment of the present disclosure is applicable in such a case.

Further, in the above-described embodiments, a form of satellite communications may be configured so that the function of a base station is present in the satellite (e.g., "regenerative satellite"), or may be configured so that the function of a base station is present on the ground and the satellite relays communications between the base station and terminals (e.g., "transparent satellite"). In other words, for example, in an embodiment of the present disclosure, downlink and uplink may be links between a terminal and a satellite or links through a satellite.

Further, disabling of HARQ feedback may be, for example, disabling of HARQ feedback or ACK/NACK feedback, and need not disable HARQ combining. For example, base station 100 may perform retransmission without HARQ feedback, and terminal 200 may perform HARQ combining. Further, terminal 200 may feed back ACK/NACK information when collectively feeding back ACK/NACK information for a plurality of data (e.g., PDSCHs) (e.g., HARQ feedback using type 1 HARQ-ACK codebook), even though disabling of HARQ feedback is configured.

Further, disabling of HARQ feedback may be, for example, disabling of retransmission control by HARQ (e.g., disabling of HARQ). In this case, both HARQ feedback and retransmission (or HARQ combining) need not be performed.

Further, the feedback enabling/disabling configuration per HARQ process may be configured by an RRC parameter "HARQprocess-disableULfeedback," or may be configured by another parameter. Further, the feedback enabling/disabling configuration per HARQ process may be a HARQ feedback configuration configured by a parameter different from that of a HARQ feedback configuration configured in SPS configuration (SPS-Config).

For the indication of the feedback enabling/disabling configuration per HARQ process to terminal 200, a set value for enabling/disabling of feedback may be configured for each HARQ process ID and indicated to terminal 200, or either or both of information on HARQ process ID for which disabling of feedback is configured and information on HARQ process ID for which enabling of feedback is configured may be indicated to terminal 200.

Further, the information on the feedback enabling/disabling configuration per HARQ process or the information on SPS configuration may be individually configured to, for example, Component Carriers (or cells) or Bandwidth Parts (BWPs) whose carrier frequencies are different from one another. This allows an operation with an appropriate feedback configuration for each Component Carrier or BWP.

Further, for example, base station 100 (e.g., controller 101) may generate control information such as a PUCCH resource used for HARQ feedback and indicate the control information to terminal 200.

Further, although transmission of downlink data (e.g., PDSCH) from base station 100 to terminal 200 has been described in the above embodiments, an embodiment of the present disclosure is not limited thereto and may be applied to uplink data (e.g., PUSCH) from terminal 200 to base station 100 or data in a link between terminals 200 (e.g., sidelink). For example, for uplink data, Configured grant (CG) may be used instead of SPS. In this case, SPS configuration can be read as Configured grant configuration. Further, the Configured grant configuration may be indicated by an RRC parameter "ConfiguredGrantConfig."

Further, although retransmission of data (e.g., PDSCH) has been described in the above embodiments, a retransmission subj ect is not limited to data (or data channel) and may be another signal or channel.

Further, a HARQ-ACK is not limited to a HARQ-ACK for reception of PDSCH, and may be a HARQ-ACK for another signal. Further, in the above-described embodiments, feedback of the response signal (e.g., HARQ-ACK) to data has been described, but the feedback subject is not limited to HARQ-ACK, and may be another signal (e.g., another Uplink Control Information (UCI)).

Further, although a description has been given of an example where enabling or disabling of HARQ feedback is individually configured for HARQ processes, enabling or disabling of HARQ feedback may be individually configured for terminals or individually configured for cells.

Further, the type of RNTI is not limited to C-RNTI and CS-RNTI, and may be RNTI of another type defined in the standard or RNTI of a type newly defined in a future standard. Furthermore, the identifier assigned to terminal 200 is not limited to RNTI, and may be another identifier.

Moreover, for example, the feedback enabling/disabling configuration configured per HARQ process number (PID) is not limited to be configured as enable or disable to each set of consecutive PIDs as in FIGS. 7, 8, 9, and 10, and enabling or disabling may be configured to a set of non-consecutive PIDs.

Further, in the above embodiments, a case has been described where the type of RNTI used for determining the type of PDSCH scheduled by dynamic scheduling (e.g., whether to be SPS PDSCH) and the type of RNTI used for determining a feedback enabling/disabling configuration are the same (e.g., either CS-RNTI or C-RNTI), but the present disclosure is not limited thereto. For example, the type of RNTI used for determining the feedback enabling/disabling configuration may be different from the type of RNTI used for determining the type of PDSCH scheduled by dynamic scheduling.

Further, in the above embodiments, a method has been described by which a feedback enabling/disabling configuration is determined based on the type of RNTI used for PDCCH scrambling, but the determination of the feedback enabling/disabling need not depend on the type of RNTI and may be based on a HARQ process ID, for example. For example, when a HARQ process ID indicated by a PDCCH scheduling a PDSCH is a HARQ process ID used in at least one SPS configuration configured for terminal 200, terminal 200 may apply the feedback enabling/disabling configuration of the corresponding SPS configuration to the PDSCH. On the other hand, when a HARQ process ID indicated by a PDCCH scheduling a PDSCH is not any of HARQ process IDs used in at least one SPS configuration configured for terminal 200, terminal 200 may apply the feedback enabling/disabling configuration per HARQ process ID to the PDSCH.

Furthermore, numerical values used in the present embodiments, such a HARQ process ID, the number of HARQ processes (e.g., the total number of processes or the number of processes used in each configuration), the number of SPS-Config, a transmission cycle of SPS, and an offset value of HARQ process ID, are merely examples, and may be other values.

In addition, the term of RRC signaling (or RRC parameter) used in the above embodiments is not limited to that term, and may be another term.

HARQ-ACK may be referred to as a ACK/NACK or HARQ-feedback, for example.

SPS may be referred to as Configured scheduling, Configured grant, or Grant free, for example.

HARQ process ID may be referred to as, for example, a HARQ process number (or index).

The time resource (e.g., slot or symbol) in which a PDCCH or DCI is transmitted may be referred to as a PDCCH monitoring occasion. Further, the time resource (e.g., slot or symbol) in which a PDSCH is transmitted may be referred to as a PDSCH transmission occasion.

Abase station may be referred to as a gNodeB or a gNB. Further, a terminal may be referred to as UE.

A Slot may be replaced with a time slot, a mini-slot, a frame, a subframe, or the like.

Further, any component termed with a suffix, such as "-er," "-or," or "-ar" in the above-described embodiments may be replaced with other terms such as "circuit (circuitry)," "device," "unit," or "module."

### (Supplement)

Information indicating whether terminal 200 supports the functions, operations, or processing described in each of the above embodiments and variations may be transmitted (or indicated) from terminal 200 to base station 100 as, for example, capability information or a capability parameter of terminal 200.

The capability information may include information elements (IEs) individually indicating whether terminal 200 supports at least one of the functions, operations, and processing described in each of the above embodiments and variations. Alternatively, the capability information may include an information element indicating whether terminal 200 supports a combination of any two or more of the functions, operations, and processing described in each of the above embodiments and variations.

Base station 100 may determine (or assume) the function, operation, or process supported (or not supported) by terminal 200 of the transmission source of the capability information, based on the capability information received from terminal 200, for example. Base station 100 may perform an operation, processing, or control corresponding to the determination result based on the capability information. For example, base station 100 may control retransmission based on the capability information received from terminal 200.

Note that the fact that terminal 200 does not support some of the functions, operations, or processing described in each of the above embodiments and variations may be interpreted as limitation of such functions, operations, or processing in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

### (Control Signal)

In the present disclosure, the downlink control signal (or downlink control information) according to an exemplary embodiment of the present disclosure may be a signal (or information) transmitted in a Physical Downlink Control Channel (PDCCH) in a physical layer, for example, or may be a signal (or information) transmitted in a Medium Access Control Control Element (MAC CE) or a Radio Resource Control (RRC) in a higher layer. Further, the signal (or information) is not limited to that notified by the downlink control signal, but may be predefined in the specifications (or standard) or may be pre-configured for the base station and the terminal.

In the present disclosure, the uplink control signal (or uplink control information) according to an exemplary embodiment of the present disclosure may be, for example, a signal (or information) transmitted in a PUCCH of the physical layer or a signal (or information) transmitted in the MAC CE or RRC of the higher layer. Further, the signal (or information) is not limited to that notified by the uplink control signal, and may be predefined in the specifications (or standard) or may be pre-configured for the base station and the terminal. The uplink control signal may be replaced with, for example, uplink control information (UCI), 1st stage sidelink control information (SCI), or 2nd stage SCI.

### (Base Station)

In the above embodiments, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Further, instead of the base station, a relay apparatus that relays communication between a higher node and a terminal may be used. Moreover, a road side device may be used.

### (Uplink/Downlink/Sidelink)

An exemplary embodiment of the present disclosure may be applied to, for example, any of an uplink, a downlink, and a sidelink. For example, an exemplary embodiment of the present disclosure may be applied to a Physical Uplink Shared Channel (PUSCH), a Physical Uplink Control Channel (PUCCH), and a Physical Random Access Channel (PRACH) in the uplink, a Physical Downlink Shared Channel (PDSCH), PDCCH or a Physical Broadcast Channel (PBCH) in the downlink, or a Physical Sidelink Shared Channel (PSSCH), a Physical Sidelink Control Channel (PSCCH), a Physical Sidelink Broadcast Channel (PSBCH) in the sidelink.

Note that the PDCCH, PDSCH, PUSCH and PUCCH are examples of a downlink control channel, a downlink data channel, an uplink data channel, and an uplink control channel, respectively. The PSCCH and PSSCH are examples of a sidelink control channel and a sidelink data channel, respectively. Further, the PBCH and PSBCH are examples of broadcast channels, and the PRACH is an exemplary random access channel.

### (Data Channel/Control Channel)

An exemplary embodiment of the present disclosure may be applied to, for example, either of a data channel or a control channel. For example, a channel in an exemplary embodiment of the present disclosure may be replaced with any one of the PDSCH, PUSCH, and PSSCH being the data channels or the PDCCH, PUCCH, PBCH, PSCCH, and PSBCH being the control channels.

### (Reference Signal)

In an exemplary embodiment of the present disclosure, a reference signal is a signal known to both of a base station and a mobile station, for example, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Interval)

In an exemplary embodiment of the present disclosure, the units of time resources are not limited to one or a combination of slots and symbols, but may be time resource units such as, for example, frames, superframes, subframes, slots, time slot subslots, minislots, or symbols, Orthogonal Frequency Division Multiplexing (OFDM) symbols, Single Carrier-Frequency Division Multiplexing (SC-FDMA) symbols, or other time resource units. The number of symbols included in one slot is not limited to the number of symbols exemplified in the above-described embodiments, and may be another number of symbols.

### (Frequency Band)

An exemplary embodiment of the present disclosure may be applied to either a licensed band or an unlicensed band (unlicensed spectrum, shared spectrum). A channel access procedure (Listen Before Talk (LBT), carrier sense, and/or Channel Clear Assessment (CCA)) may be performed prior to transmission of each signal.

### (Communication)

An exemplary embodiment of the present disclosure may be applied to any of communication between a base station and a terminal (Uu link communication), communication between a terminal and a terminal (Sidelink communication), and communication of a Vehicle to Everything (V2X). For example, the channel in an exemplary embodiment of the present disclosure may be replaced with the PSCCH, PSSCH, Physical Sidelink Feedback Channel (PSFCH), PSBCH, PDCCH, PUCCH, PDSCH, PUSCH, or PBCH.

In addition, an exemplary embodiment of the present disclosure may be applied to either of a terrestrial network or a network other than the terrestrial network using a satellite or a High Altitude Pseudo Satellite (HAPS) (Non-Terrestrial Network (NTN)). Further, an exemplary embodiment of the present disclosure may be applied to a terrestrial network having a larger transmission delay in comparison to a symbol length or a slot length, such as a network having a large cell size or an ultra-wideband transmission network.

### (Antenna Port)

In an exemplary embodiment of the present disclosure, an antenna port refers to a logical antenna (antenna group) composed of one physical antennas or a plurality of physical antennas. For example, the antenna port does not necessarily refer to one physical antenna, and may refer to an array antenna including a plurality of antennas. For example, it is not defined how many physical antennas the antenna port is composed of, and the number of physical antennas may be defined as the smallest unit allowing a terminal station to transmit a Reference signal. Also, the antenna port may be defined as the smallest unit multiplied by a weight of a precoding vector.

### <5G NR System Architecture and Protocol Stack>

3GPP has been working at the next release for the 5th generation cellular technology, simply called 5G, including the development of a new radio access technology (NR) operating in frequencies ranging up to 100 GHz. The first version of the 5G standard was completed at the end of 2017, which allowed proceeding to 5G NR standard-compliant trials and commercial deployments of terminals (e.g., smartphones).

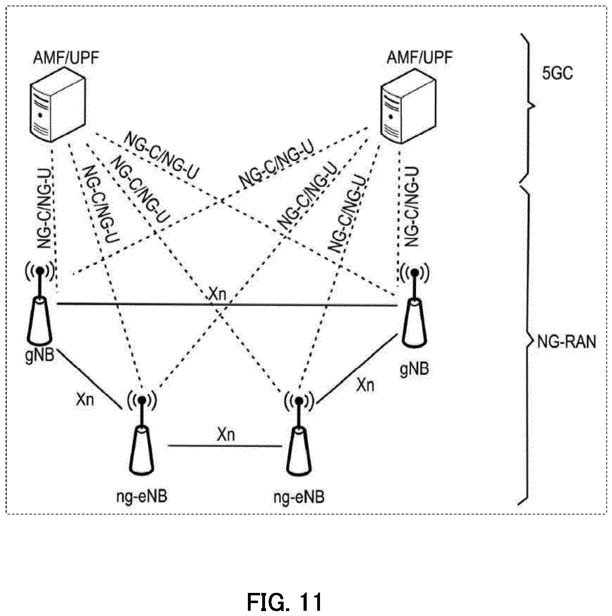

For example, the overall system architecture assumes an NG-RAN (Next Generation-Radio Access Network) that includes gNBs. The gNB provides the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 11 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC, and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates in the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### <Functional Split between NG-RAN and 5GC in 5G NR>

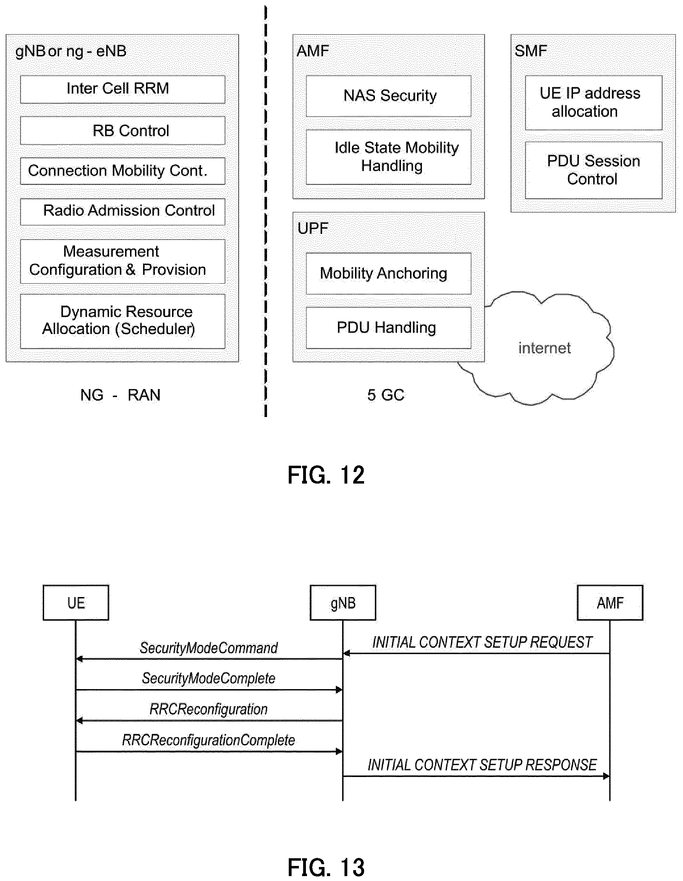

FIG. 12 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an action management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

FIG. 13 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer (s), DRB (s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB informs the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which, in operation, transmits an initial context setup message to the gNodeB via the NG connection such that a signaling radio bearer between the gNodeB and a User Equipment (UE) is configured up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

### <Usage Scenarios of IMT for 2020 and beyond>

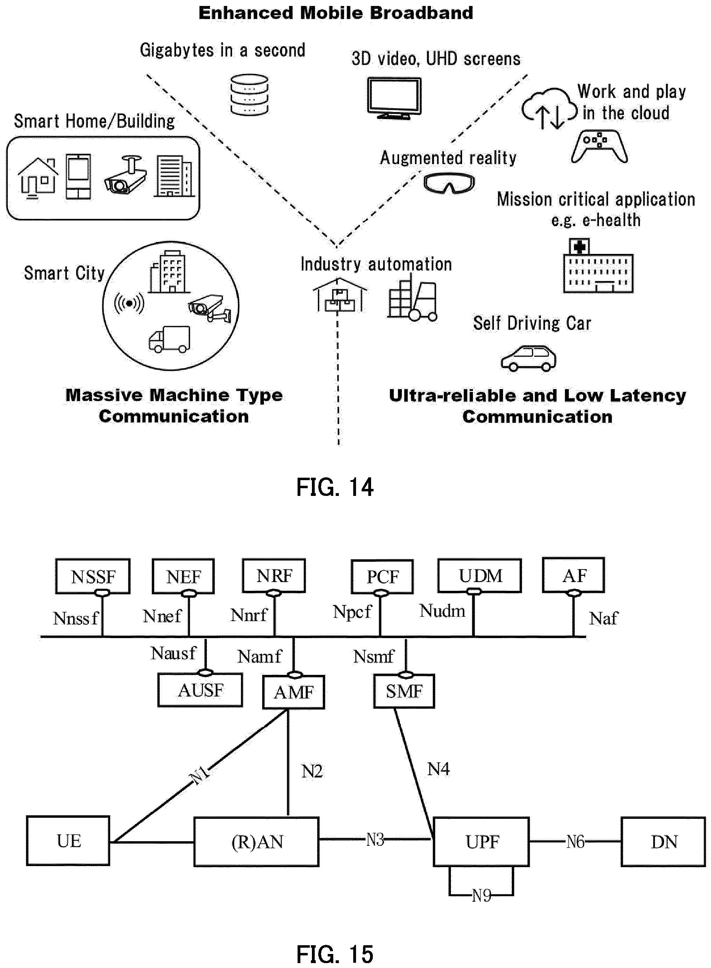

FIG. 14 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 14 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements configured by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been identified such as factory automation, transport industry and electrical power distribution. The tighter requirements are higher reliability (up to 10-6 level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearer (DRB) together with the PDU Session, e.g., as illustrated above with reference to FIG. 13. Further, additional DRB (s) for QoS flow (s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 15 illustrates a 5G NR non-roaming reference architecture (see TS 23.501 v16.1.0, section 4.23). An Application Function (AF), e.g., an external application server hosting 5G services, exemplarily described in FIG. 14, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 15 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that includes: a transmitter, which, in operation, transmits a request containing a QoS requirement for at least one of URLLC, eMMB and mMTC services to at least one of functions (for example NEF, AMF, SMF, PCF,UPF, etc.) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

When future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A communication apparatus according to an embodiment of the present disclosure includes: control circuitry, which, in operation, determines, based on a type of an identifier used for a control signal performing dynamic scheduling, a configuration of enabling and disabling of feedback in retransmission control of the dynamic scheduling; and transmission circuitry, which, in operation, performs transmission processing on a signal of the feedback based on the configuration of enabling and disabling of feedback.

In an embodiment of the present disclosure, the control circuitry determines a first configuration configured per semi-static scheduling as the configuration of enabling and disabling of feedback when the identifier is a first identifier, and determines a second configuration configured per retransmission process as the configuration of enabling and disabling of feedback when the identifier is a second identifier different from the first identifier.

In an embodiment of the present disclosure, retransmission of data in the semi-static scheduling is performed by the dynamic scheduling, the first identifier is used for scrambling the control signal scheduling retransmission of data in the semi-static scheduling, and the second identifier is used for scrambling the control signal scheduling data different from the data in the semi-static scheduling.

In an embodiment of the present disclosure, the control circuitry determines, when the identifier is the first identifier, a configuration corresponding to a retransmission process number used for the dynamic scheduling among a plurality of the first configurations as the configuration of enabling and disabling of feedback.

In an embodiment of the present disclosure, the control circuitry determines, when the identifier is a first identifier, a first configuration configured per semi-static scheduling as the configuration of enabling and disabling of feedback, and determines, when the identifier is a second identifier different from the first identifier, the first configuration as the configuration of enabling and disabling of feedback in a case where a retransmission process number used for the dynamic scheduling is used for the semi-static scheduling, and determines, when the identifier is a second identifier different from the first identifier, a second configuration configured per retransmission process as the configuration of enabling and disabling of feedback in a case where the retransmission process number used for the dynamic scheduling is not used for the semi-static scheduling.

In an embodiment of the present disclosure, the control circuitry determines, based on the type of the identifier, either one of a first configuration configured per semi-static scheduling and a second configuration configured per retransmission process as the configuration of enabling and disabling of feedback, and the first configuration is determined based on the second configuration corresponding to one of retransmission process numbers used for the semi-static scheduling.

In an embodiment of the present disclosure, the control circuitry determines, based on the type of the identifier, either one of a first configuration configured per semi-static scheduling and a second configuration configured per retransmission process as the configuration of enabling and disabling of feedback, and the control circuitry does not perform reception processing on retransmission data in the semi-static scheduling when the first configuration is disabling of feedback.

A communication apparatus according to an embodiment of the present disclosure includes: control circuitry, which, in operation, determines, based on a type of an identifier used for a control signal performing dynamic scheduling, a configuration of enabling and disabling of feedback in retransmission control of the dynamic scheduling; and reception circuitry, which, in operation, performs reception processing on a signal of the feedback based on the configuration of enabling and disabling of feedback.

In a communication method according to an embodiment of the present disclosure, a communication apparatus determines, based on a type of an identifier used for a control signal performing dynamic scheduling, a configuration of enabling and disabling of feedback in retransmission control of the dynamic scheduling, and performs transmission processing on a signal of the feedback based on the configuration of enabling and disabling of feedback.

In a communication method according to an embodiment of the present disclosure, a communication apparatus determines, based on a type of an identifier used for a control signal performing dynamic scheduling, a configuration of enabling and disabling of feedback in retransmission control of the dynamic scheduling, and performs reception processing on a signal of the feedback based on the configuration of enabling and disabling of feedback

The disclosures of Japanese Patent Applications No. 2021-166187, filed on October 8, 2021, including the specifications, drawings and abstracts, are incorporated herein by reference in their entireties.

### Industrial Applicability

One aspect of the present disclosure is useful in radio communication systems.

### Reference Signs List

100 Base station
101 Controller
102, 205 Encoder/modulator
103, 206 Radio transmitter
104, 201 Antenna
105, 202 Radio receiver
106, 203 Demodulator/decoder
107 HARQ-ACK determiner
108 Retransmission controller
200 Terminal
204 HARQ-ACK generator

## Claims

1. A communication apparatus, comprising:
control circuitry, which, in operation, determines, based on a type of an identifier used for a control signal performing dynamic scheduling, a configuration of enabling and disabling of feedback in retransmission control of the dynamic scheduling; and
transmission circuitry, which, in operation, performs transmission processing on a signal of the feedback based on the configuration of enabling and disabling of feedback.

2. The communication apparatus according to claim 1, wherein
the control circuitry determines a first configuration configured per semi-static scheduling as the configuration of enabling and disabling of feedback when the identifier is a first identifier, and determines a second configuration configured per retransmission process as the configuration of enabling and disabling of feedback when the identifier is a second identifier different from the first identifier.

3. The communication apparatus according to claim 2, wherein
retransmission of data in the semi-static scheduling is performed by the dynamic scheduling,
the first identifier is used for scrambling the control signal scheduling retransmission of data in the semi-static scheduling, and
the second identifier is used for scrambling the control signal scheduling data different from the data in the semi-static scheduling.

4. The communication apparatus according to claim 2, wherein
the control circuitry determines, when the identifier is the first identifier, a configuration corresponding to a retransmission process number used for the dynamic scheduling among a plurality of the first configurations as the configuration of enabling and disabling of feedback.

5. The communication apparatus according to claim 1, wherein
the control circuitry
determines, when the identifier is a first identifier, a first configuration configured per semi-static scheduling as the configuration of enabling and disabling of feedback, and
determines, when the identifier is a second identifier different from the first identifier, the first configuration as the configuration of enabling and disabling of feedback in a case where a retransmission process number used for the dynamic scheduling is used for the semi-static scheduling, and determines, when the identifier is a second identifier different from the first identifier, a second configuration configured per retransmission process as the configuration of enabling and disabling of feedback in a case where the retransmission process number used for the dynamic scheduling is not used for the semi-static scheduling.

6. The communication apparatus according to claim 1, wherein
the control circuitry determines, based on the type of the identifier, either one of a first configuration configured per semi-static scheduling and a second configuration configured per retransmission process as the configuration of enabling and disabling of feedback, and
the first configuration is determined based on the second configuration corresponding to one of retransmission process numbers used for the semi-static scheduling.

7. The communication apparatus according to claim 1, wherein
the control circuitry determines, based on the type of the identifier, either one of a first configuration configured per semi-static scheduling and a second configuration configured per retransmission process as the configuration of enabling and disabling of feedback, and
the control circuitry does not perform reception processing on retransmission data in the semi-static scheduling when the first configuration is disabling of feedback.

8. A communication apparatus, comprising:
control circuitry, which, in operation, determines, based on a type of an identifier used for a control signal performing dynamic scheduling, a configuration of enabling and disabling of feedback in retransmission control of the dynamic scheduling; and
reception circuitry, which, in operation, performs reception processing on a signal of the feedback based on the configuration of enabling and disabling of feedback.

9. A communication method, comprising:
determining, by a communication apparatus, based on a type of an identifier used for a control signal performing dynamic scheduling, a configuration of enabling and disabling of feedback in retransmission control of the dynamic scheduling, and
performing, by the communication apparatus, transmission processing on a signal of the feedback based on the configuration of enabling and disabling of feedback.

10. A communication method, comprising:
determining, by a communication apparatus, based on a type of an identifier used for a control signal performing dynamic scheduling, a configuration of enabling and disabling of feedback in retransmission control of the dynamic scheduling, and
performing, by the communication apparatus, reception processing on a signal of the feedback based on the configuration of enabling and disabling of feedback.
